Europäisches Patentamt

European Patent Office

Office européen des brevets

(19)

(11) EP 0 594 061 B1

(12) EUROPEAN PATENT SPECIFICATION

(45) Date of publication and mention
of the grant of the patent:
**07.01.1999 Bulletin 1999/01**

(51) Int Cl.⁶: **G06K 9/00**, G06F 15/80

(21) Application number: **93116649.0**

(22) Date of filing: **14.10.1993**

(54) **Apparatus for verifying a container code**

Gerät zum Überprüfen eines Containerkodes

Appareil pour vérifier un code d'un container

(84) Designated Contracting States:
**BE DE FR IT NL**

(30) Priority: **23.10.1992 GB 9222322**

(43) Date of publication of application:
**27.04.1994 Bulletin 1994/17**

(73) Proprietor: **PSA Corporation Limited**
**Singapore 119963 (SG)**

(72) Inventors:
• **Lui, Ho Chung**
**Singapore 0410 (SG)**
• **Lee, Chung Mong Tower II, 3a, Senior Staff Qtr.**
**Clear Water Bay, Kowloon, Hong Kong (HK)**
• **Kankanhalli, Atreyi Mohan**
**Singapore 1027 (SG)**
• **Lau, Soo Leng**
**Singapore 1024 (SG)**
• **Low, Kah Chan**
**Singapore 1542 (SG)**
• **Goh, Jit Leng**
**Singapore 0314 (SG)**

(74) Representative: **Meddle, Alan Leonard et al**
**FORRESTER & BOEHMERT**
**Franz-Joseph-Strasse 38**
**80801 München (DE)**

(56) References cited:
• **PROC. OF THE 14TH ANNUAL INT. COMPUTER SOFTWARE & APPLICATIONS CONF., 31 October 1990, CHICAGO, IL pages 190 - 5, XP000223607 H C LUI ET AL 'Neural network application to container number-recognition'**
• **COMPCON 91, 25 February 1991 pages 476 - 82, XP000294028 C M ANDERSON 'Automated recognition of embossed characters using artificial neural systems'**
• **PROC. IECON'91, vol.3/3, 28 October 1991, KOBE, JP pages 1739 - 44, XP000325469 R. MULLOT ET AL 'Automatic extraction methods of container identity numbers and registration plate of cars'**

**Description**

The present invention relates to an apparatus for verifying a container code and more specifically for verifying an identification code on a cargo container against a target code.

Cargo containers each have a unique identification code (ID code) which is painted or applied by other means onto the sides of the container surface. The ID code must be read and verified against a computer record whenever a container is towed in or out of a container yard in a port. This ensures that the correct truck is towing the correct container, or containers, through a gate of a cargo terminal. Currently, the code is read and verified manually as the truck passes through the gate. The truck must be stopped at the gate whilst each ID code on each container being towed by the truck is checked. Human inspection of the ID code is slow and prone to oversights and errors. Each gate must be manned by at least one operator thus necessitating significant man power.

Document "PROC. OF THE 14TH ANNUAL INT. COMPUTER SOFTWARE & APPLICATIONS CONFERENCE, 31 October 1990, CHICAGO, IL; pages 190-195 ; H.C. LUI ET AL; 'Neural network application to container number-recognition'" describes the application of a recognition to the recognition of container identification numbers, wherein each node of the input layer is connected to all nodes of the following intermediate layer.

One object of the present invention is to provide a container number recognition apparatus which automates the present verification process.

Another object of the present invention is to provide a container number recognition apparatus which improves the efficiency of the verification process and to require the presence of only one gate operator to man multiple gates at the port.

Accordingly the present invention provides a container code verification apparatus as set out in claim 1.

In order that the present invention may be more readily understood, an embodiment thereof is now described, by way of example, with reference to the accompanying drawings in which :

Figures 1a and 1b are examples of container identification codes which have been highlighted, the ID code in Figure 1a in a light colour on a dark background and the ID code of Figure 1b in a dark colour on a light background;
Figure 2 is a diagrammatic representation of one embodiment of the present invention;
Figure 3 illustrates a truck in position at a gate installed with an embodiment of the present invention;
Figure 4 illustrates vertical and horizontal segments in a pixel array in accordance with one embodiment of the present invention;
Figure 5 illustrates a right boundary vertical segment in accordance with one embodiment of the present invention;
Figure 6 is a schematic representation of a multi-layer neural network structure as incorporated in one embodiment of the present invention;
Figure 7(i) illustrates a window-based neural network architecture for use with one embodiment of the present invention;
Figure 7(ii) illustrates a conventional neural network architecture;
Figure 8 illustrates an example of a matching problem;
Figure 9 illustrates a matching path found for the example of Figure 8; and
Figure 10 illustrates the local continuity restraints applicable to an embodiment of the present invention.

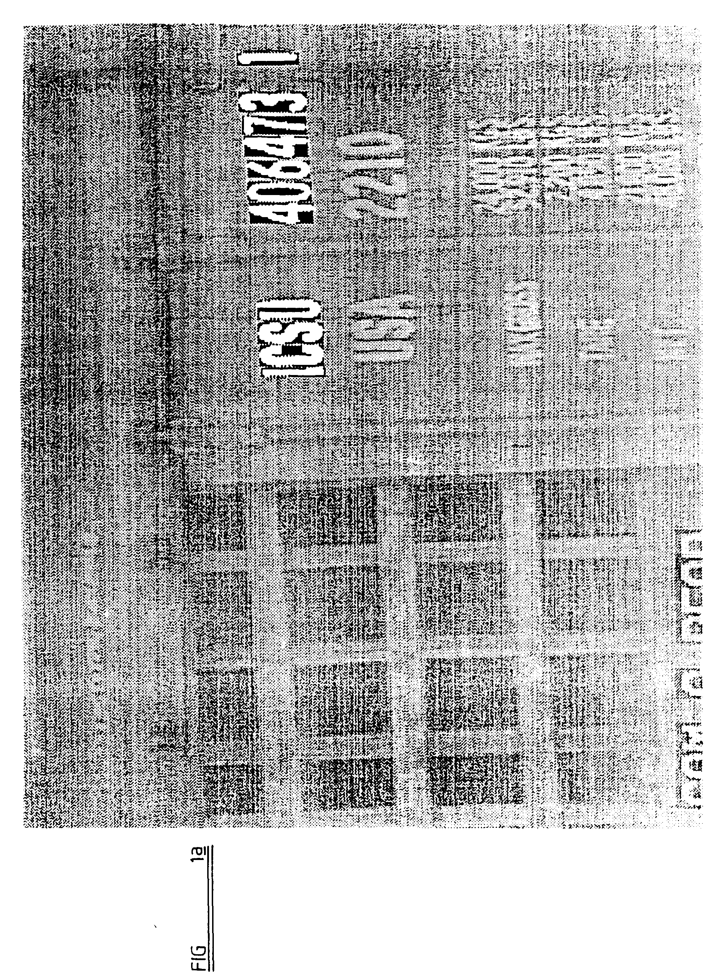

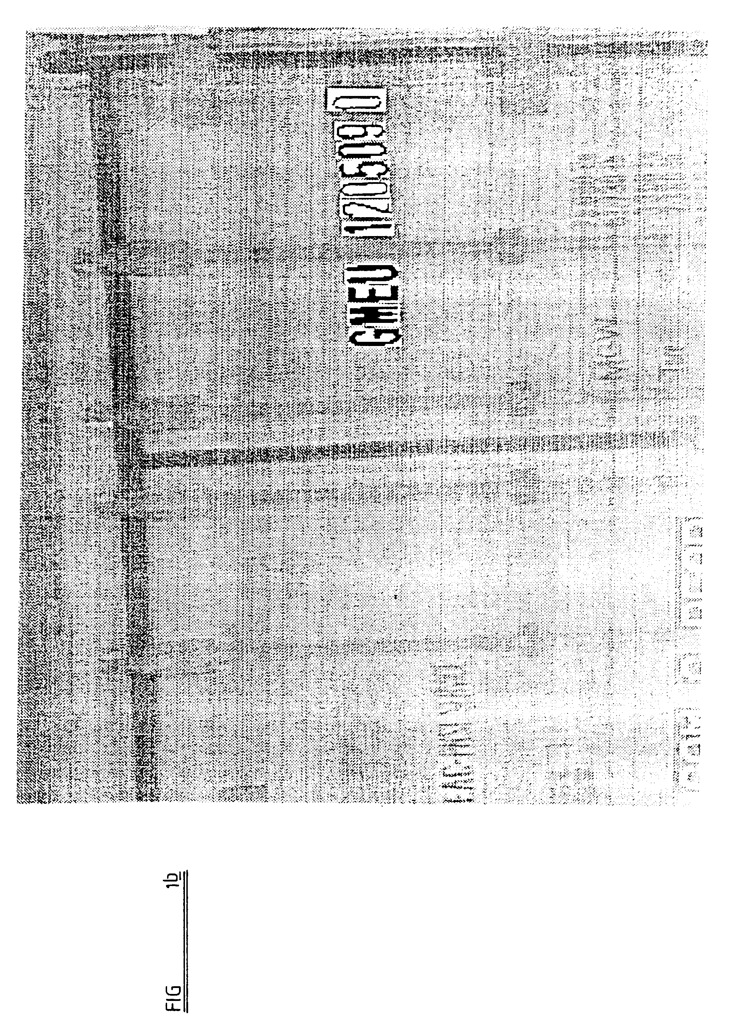

A cargo container, such as a standard ISO container, comprises a rigid metal box container. Each container is identified by a unique ID code comprising a string of alphanumeric characters which is usually painted onto at least one surface of the container. Other information is also applied to the container surface, such as gross weight, net weight, country of origin and the like. Thus, the ID code is located amongst other characters containing the other information. The containers themselves, due to the environment in which they are used, often become marked, dirty or dented. The presence of corrugations, structural bars, smears and other noise may distort the characters. Thus, the variation in character and background intensity and the inherent lack of adequate contrast pose problems for a reliable method and apparatus for ID code character extraction, recognition and verification. The intensity and contrast of the characters and the background varies with respect to the illumination of the container surface in different conditions, such as during daylight, night time and cloud cover. Also, the characters of the ID code may be presented to the recognition apparatus at an angle, thus resulting in characters which are skewed as shown in Figures 1a and 1b which also illustrate other characters in addition to the ID code which are present on each container.

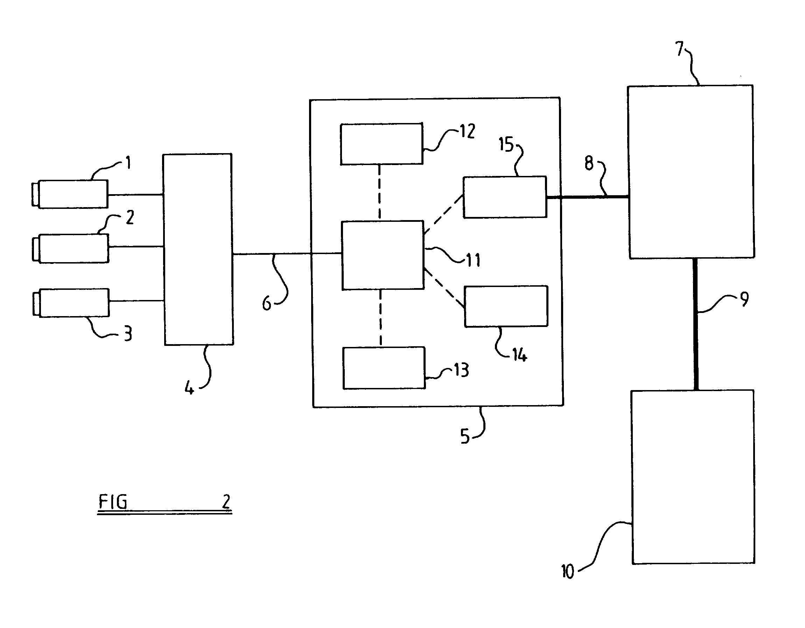

Referring to Figure 2, the apparatus embodying the invention comprises a plurality of cameras 1, 2 and 3, three in this case, a multiplexer 4 which transmits the signals from the cameras 1, 2 and 3 to a transputer network 5 via a BNC connection 6. The flow of data from the transputer network 5 is connected to and controlled by a host computer 7 via an AT bus 8. The host computer 7 may be, for example a PC-AT 386 microcomputer which is in turn connected by an RS-232 serial link 9 to a gate computer 10 which stores container information obtained from a mainframe computer (not shown).

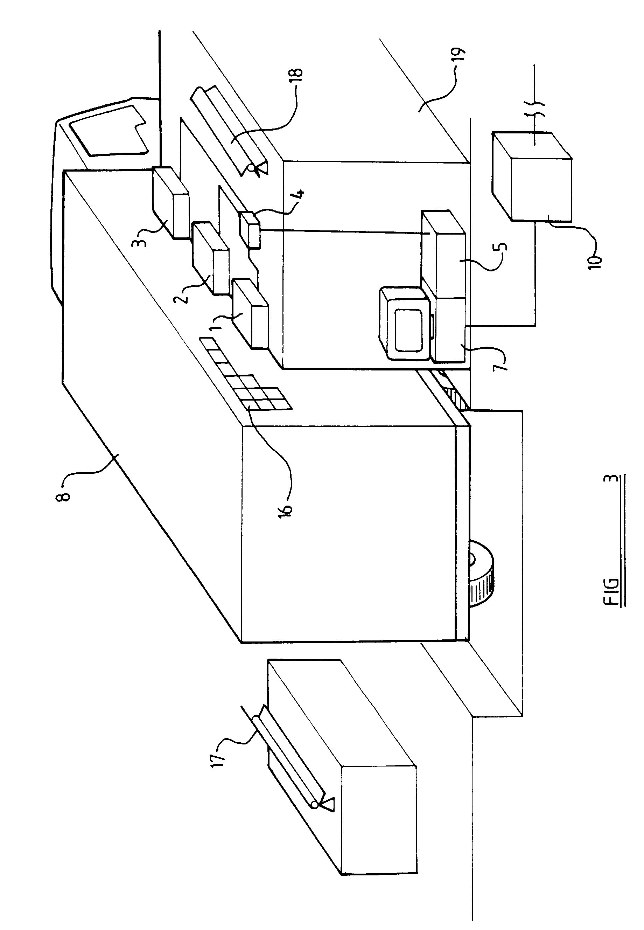

When a truck loaded with a container approaches a gate and stops at the gate (as shown in Figure 3), the gate operator initiates the verification process on the host PC 7. Three closed circuit TV cameras 1,2 and 3 are used to capture images of the container 8. Each image comprises an array of 720 x 512 pixels, each pixel being capable of 256 grey levels. The images are sent via the multiplexer 4 to the transputer network 5. The transputer network 5 comprises a monochrome frame grabber 11 (Figure 20) which acts as a master transputer and controls the flow of execution commands to a number of worker transputers 12,13 AND 14 (in this case three), and a root transputer 15 which is connected to the host PC 7 and allows communication between the host PC 7 and the other transputers. The host PC 7 is responsible for file saving, input and output via a keyboard and VDU and for communication with the gate mainframe computer which stores a record of container information obtained from a mainframe computer which can be interrogated by the host PC 7. The host PC 7 also displays the results of the verification to the operator. When a truck with a container 8, or containers, arrives at the gate, the gate mainframe computer sends information about the container 8 expected at the gate, including which container ID code 16 is expected, to the gate PC 10.

The appropriate camera 1,2 and 3 is chosen to focus on the rear of the container 8 and the frame grabber contrast setting is adjusted to obtain a good level of contrast between the characters on the container 8 and the background. A segmentation process then locates and extracts a bounding box for each ID character of the ID code 16 from the container image. The extracted bounding box is normalised to a standard size and a character pixel map of this information is passed to a network character recogniser which calculates the alphanumeric character most likely to be represented by the character pixel map. A proposed ID character code comprising the recognised characters derived from the image information extracted from the container 8 is matched with the expected ID code provided by the gate computer 10 and the two codes are compared. The comparison of the two ID codes produces a confidence measure which indicates the degree to which the two ID codes match. The operator can then decide to hold back or allow the truck to pass through depending on the confidence measure determined by the matching comparison between the two ID codes. If the confidence measure is over a pre-set threshold then the truck may continue, if not, then the truck is held at the gate.

The container number recognition system can handle the entire range of container sizes. This includes containers of length 20 ft, 40 ft and 45 ft (6.1m, 12.2m and 13.7m respectively) as well as heights varying from 8 ft to 9.5 ft (2.4m and 2.9m respectively). Also, the length of the chassis on which the container, or containers, are placed can be 20 ft, 40 ft or 45 ft (6.1m, 12.2m and 13.7m respectively). Therefore, the number and location of the cameras is such that the container images captured are of adequate quality to enable the ID code characters to be resolved.

The operation of the apparatus is now discussed in more detail:

During daytime operation the natural level of illumination of containers 8 at the gate is normally sufficient and as such no external lighting is necessary. However, in operation during the evening and the night, fluorescent lights 17, 18 are used to illuminate the containers 8. As shown in Figure 3, a rear light 17 is located behind the container 8 facing the gate house 19 to improve the contrast of the image of the container 8, against the background. A frontal illumination 18 source is located facing the container 8 to improve the illumination of features on the surface of the container such as the ID code characters 16. If the characters which are to be extracted from the surface of the container are to be resolvable from the background of the container surface then it has been found that there must be an intensity contrast between the background and the subject of at least 15 - 20% of the overall image intensity. The closed circuit TV cameras 1,2 and 3 have an auto-iris capability to compensate for small variations in illumination.

Upon receipt of a target ID code from the gate computer 10 the appropriate camera 1,2 or 3 is chosen to focus on the rear of the container 8. The selected camera 1,2 or 3 triggers the frame grabber 11 which applies an algorithm to adjust the contrast setting of the frame grabber 11 so that the mean grey level for a predetermined image window 20 defined by the camera's field of view is at an optimal value. The algorithm uses Newton's method to compute the new value of the contrast setting according to equation (i):

i)     *new contrast = old contrast + slope (mean-optimum mean)*

*slope = Δ contrast/Δ mean at last iteration*

The delta operator (Δ) indicates the change in contrast or mean grey level respectively between the last iteration and the current one. The optimal mean value and the slope have been experimentally determined.

Having determined the contrast setting, the camera 1,2 or 3 captures an image which is sent via the multiplexer 4 to the frame grabber 11 where the image is processed further. The image consists of an array of 720 x 512 pixels, each pixel being capable of a quantisation level of between 0 and 255.

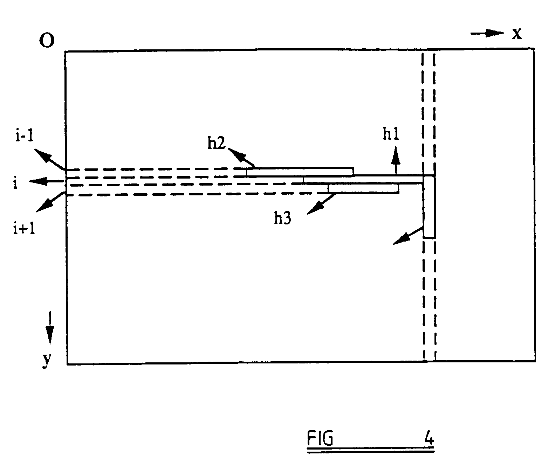

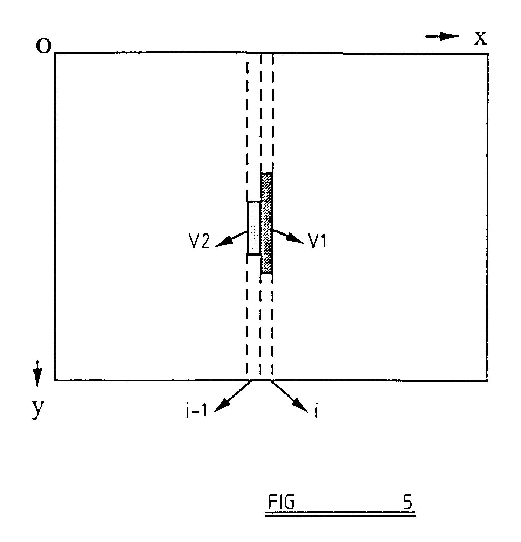

To determine the location of all potential characters within the image and to establish a surrounding rectangle or bounding box around each potential character, the captured image is scanned by the frame grabber one column at a time. The grey level of each pixel in each column is quantised and horizontal and vertical segments are created based on the quantised value. A horizontal segment (see Figure 4) is defined as a part of a row of the image in a column for which the adjacent pixels (in the horizontal direction) have the same quantised value. Similarly, a vertical segment (see Figure 5) is a part of a column for which adjacent pixels (in the vertical direction) have the same quantised value. Therefore, the image has now been divided into vertical and horizontal segments consisting of a number of pixels which are associated by their respective quantised values and the image can now be scanned segment by segment thus saving both time and memory space.

The vertical segments are scanned and all segments which are on the right hand boundary of a character are detected. These are defined as right boundary vertical segments (see Figure 4) and each of these segments must satisfy two conditions : there must a corresponding vertical segment (V2) to the left of the vertical segment (V1) of which at least a part must be adjacent to the first segment (V1) and the quantised value of the corresponding vertical segment (V2) must be different from that of the right boundary vertical segment (V1).

The threshold or extent of each potential character is based on the pixel grey level at the boundary defined by the boundary segments. If the background colour of the image is white, then the threshold is selected as the lowest grey level. If the background colour of the image is black, then the threshold is selected as the highest grey level. The threshold is used to determine if the potential character is connected to any other components which may belong to the same character. An example of connected horizontal segments is shown in Figure 4 which shows three connected horizontal components h1 to h3. By limiting the character size to a predetermined level, the number of connected components will be reduced. Each character is surrounded by a bounding box which defines the spatial extent of a character.

This process creates a character pixel map comprising horizontal and vertical segments. Features based on the aspect ratio and the histogram of the character pixel map are computed. If the value of the feature defined by the character pixel map is not in an acceptable range which has been defined by heuristic rules, then the feature is eliminated as noise.

The resultant features or characters which are in the acceptable range are processed further to define specific groupings of characters. This process determines the location of all potential characters in the image and finds the surrounding rectangle (bounding box) for each potential character. The characters are thus grouped together by proximity and height based on their relative spatial coordinates in order to retain only those characters which should belong to the ID code.

Figures 1a and 1b show the ID code characters in one group which has been highlighted. The other characters are also grouped together, but not highlighted.

Thus, having established the location of all the potential characters and surrounded each character with a boundary box, all the boundary boxes are sorted into horizontal (x) and vertical (y) directions. This allows the characters to be further sorted into groups of horizontal rows. The ID code usually occurs in one, two or three horizontal rows. Any single isolated characters are discarded at this stage.

The polarity of the characters in each group is determined, i.e. whether the characters are white on black or black on white. This information is determined based on the uniformity of the height and width of the characters in the group assuming that there are more uniform characters of one polarity than of another. This information is determined by using a belief or uniformity measure as disclosed in the journal of Mathematical Analysis and Applications 65:531-542, Nguyen HT (1978), "On random sets and belief functions".

The grouped characters are selected starting from the top-most row of the image. Those groups which have a belief uniformity measure above a predetermined level are chosen. The number of character groups selected is guided by the total number of characters present in the target ID code provided by the mainframe computer as well as the uniformity measure.

At this stage, groups of potential characters have been identified from the image. However, these extracted characters may be skewed, of different sizes and on different backgrounds. Therefore, a normalisation step is carried out which firstly converts the pixel maps of each character to a white character on a black background and secondly standardises the size of each character pixel map using scale factors computed in both x and y directions. Usually, this results in a linear compression since the size of the extracted characters is larger than the standard size.

The normalised grey-scale character pixel map is presented as the input to a neural network. The quantised grey level of each pixel is normalised to a value between 0 and 1. The grey level value is not binarised to either 0 or 1 as the choice of the binarisation threshold would influence the shape of the character defined by the pixel map. This may result in portions of a character being artificially connected or broken.

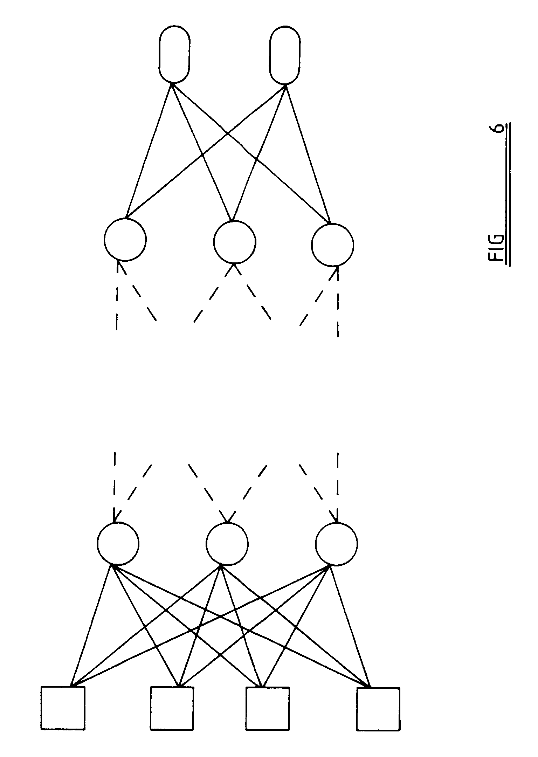

The neural network is used to recognise the patterns defined by the standard size characters. This method is utilised because it offers good tolerance to noise and deformations in the input characters. Specifically a multi-layer feed-forward window-based neural network model is used. The general architecture of the neural network is shown in Figure 6.

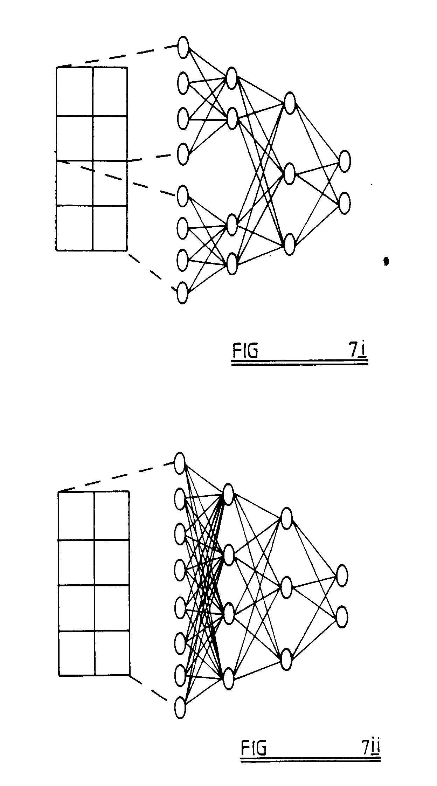

The neural network consists of an input layer, one or more hidden intermediate layers and an output layer. Defined areas or windows of the normalised grey level character pixel map are used as the input for the neural network. In one embodiment, shown in Figure 7, two windows are used which are defined by the upper left and lower right co-ordinates of two rectangles of equivalent size. Together, the two rectangles bound the entire character pixel map. The windows are fed to the input layer of the neural network and each pixel within the boundaries of each window constitutes an input node of the input layer.

Each node of the network computes the following function:

$$\text{ii)} \qquad y_i = f\left(\sum_{j=i}^{N} w_{i,j} - \theta_i\right)$$

where

$y_i =$     output activation value of node i

$x_j =$     $j^{th}$ signal input to node i

$w_{i,j} =$     connection weight from node j to node i

$\theta_i =$     bias

In the above equation, $f(x)$ is a monotonic increasing, differentiable function, the output of which is bounded between 0 and 1.

The input nodes of the input layer are connected to specified ones of the first hidden intermediate nodes of the first hidden intermediate layer. Thus, input nodes of the first window are connected to a first set of specified intermediate nodes and input nodes of the second window are connected to a second set of specified nodes. In this manner the input nodes associated with one window are fully connected to specified hidden intermediate nodes in the first layer but not to hidden intermediate nodes in the first layer associated with other windows. The two sets of this network architecture is shown in Figure 7(i) together with a conventional network as shown in Figure 7(ii). For subsequent layers after the input layer and the first intermediate layer, the nodes of consecutive layers are fully connected.

In a particular embodiment of the invention only the following characters need to be recognized: A to Z and 0 to 9, i.e. a total of 36 characters, 26 letters and 10 numerals. Therefore, the output layer would consist of 36 nodes each representing a particular character.

Using a window-based neural network of this type allows windows to be strategically located in the character pixel map to discriminate between confusing characters and improve the accuracy with which the characters are classified. Also, compared to the conventional fully connected network shown in Figure 7(ii), less synaptic connections are required between the input and first intermediate layers thus reducing processing time and memory requirements. Experimental results have shown that the time required to train such a system can be substantially reduced yet the recognition performance is improved slightly.

The network is trained using the popular sigmoidal function:

$$\text{iii)} \qquad f(x) = \frac{1}{1 + e^{-x/T}}$$

and the network is operated using an approximation to the training function:

$$\text{iv)} \qquad f(x) = \frac{T + x + |x|}{2(T + |x|)}$$

In both cases, T is a parameter used to control the non-linearity. Both functions behave similarly in that they are both bounded between 0 and 1, are monotonically increasing and differentiable. Moreover, when T approaches 0, both become step functions. When T approaches $\infty$, both approximate to a horizontal line passing through f(x) = 0.5. Because the second function requires more iterations to attain a similar level of recognition performance compared to the first function, the first function is used for training purposes. However, after training, the second function replaces the first function without any degradation of recognition performance.

In a preferred embodiment, the neural network does not attempt to distinguish between "O" and "0" or "I" and "1" because some container companies use identical character fonts for both characters. However, the matching procedure which is to be discussed below can resolve any ambiguity that arises due to this confusion.

As previously discussed, the system is intended to verify the ID code of a particular container and this is finally achieved by a last processing step which compares the character string output from the neural network with the target ID code character string sent from the mainframe computer. However, because other processing steps are involved which may introduce errors, the two character strings may not be simply compared. For example, in the segmentation step, ID code characters may be discarded as noise resulting in the omission of a character from the recognised character string or, noise such as smears or marks on the container surface may be treated as ID code characters resulting in characters being inserted into the recognised character string. The segmentation step may determine a character boundary incorrectly and thereby split a single character into two. Also, the neural network may recognise a character incorrectly thus substituting a particular character with an erroneous character. It can clearly be seen that the recognised character string may be potentially erroneous and so a matching step is included to establish the best match between the recognised character string and the target ID code string.

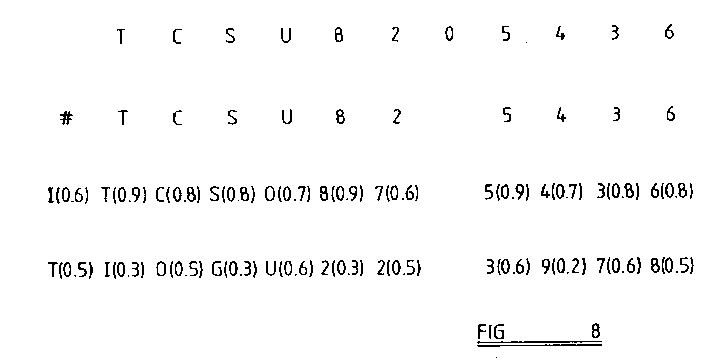

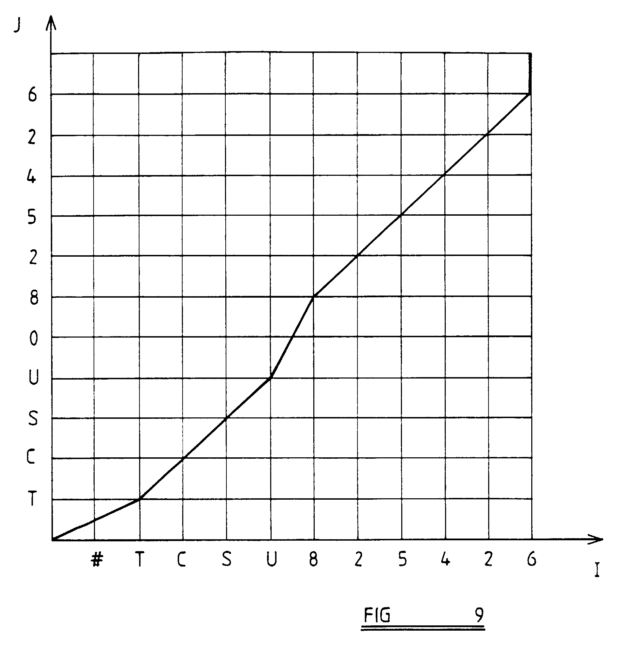

Referring to Figure 8, the top row of characters represents the target ID string and the second row represents the character string achieved after the segmentation step. The neural network outputs a range of scores, each of which represents the degree of similarity between the input pixel map and the 36 character output classes of the neural network (i.e. the degree of recognition for each character class). Rows 3 and 4 of Figure 8 show the best and second best scores respectively. For each entry in these rows, the character denotes the recognized code while the number in parenthesis indicates the corresponding score. As shown in the example, the neural network commits two substitution errors since the best score for the letter "U" in the target string is given as "O" (0.7) and the target character of "2" is given by the neural network as "7"(0.6). In this example, the segmentation step has also introduced two errors, the addition of the character "#" in response, presumably, to some noise and has omitted the character "0" from the target ID code character string. The procedure described below has been designed to resolve these ambiguities in both the recognition and segmentation steps by converting the problem of verifying the target ID code character string into a two dimensional path searching problem, as shown in Figure 9 which indicates the matching path found for the example of Figure 8, the goal of which is to find the optimal matching path.

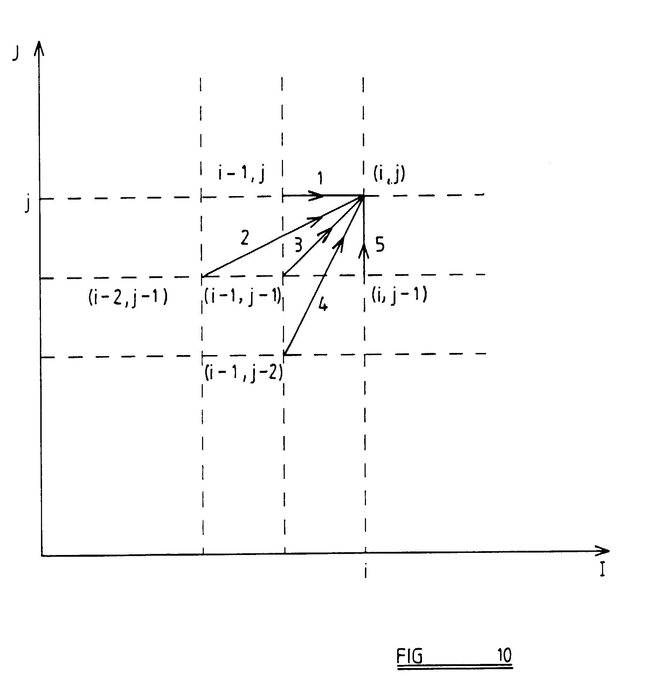

In the preferred embodiment, the optimal path is found by a technique known as Dynamic Time Warping as discussed in Itakura F. (1975) "Minimum prediction residual principle applied to speech recognition", IEEE Transactions on Acoustics, Speech and Signal Processing 23:67-72 and in Satoe H, Chiba S (1978) "Dynamic programming algorithm optimisation for spoken word recognition", IEEE Transactions on Acoustics Speech and Signal Processing 26: 43-49. In this embodiment local continuity constraints as shown in Figure 10 are defined to restrict the search area. The constraints specify that to reach point $(i, j)$, five local paths are possible (paths 1-5). Under normal circumstances i.e. no insertion or deletion of characters at this point, path 3 should be taken. If path 2 is chosen, the algorithm suggests that the $(i - 1)^{th}$ character in the recognition string is an insertion error. Likewise, if path 4 is selected, it indicates that there is an omission between the $(i - 1)^{th}$ and $i^{th}$ position. Path 1 and path 5 are included to take care of boundary conditions. Path 1 caters for extraneous characters positioned before or after the target ID string whereas path 5 is needed for cases where the first or last few ID characters are missing. Thus paths 1 and 5 are invoked only near the beginning or the end of the search area.

Once the local continuity constraints are specified, the global search area is determined. To find the best path, a cumulative matching score $D_{i,j}$ is maximised. This score can be recursively computed as follows:

$$v) \qquad D_{i,j} = \max \begin{cases} D_{i-1,j} & ; \text{ path } 1 \\ D_{i-2,j-1} + S - p & ; \text{ path-2} \\ D_{i-1,j-1} + S & ; \text{ path-3} \\ D_{i-1,j-2} + S - q & ; \text{ path-4} \\ D_{i,j-1} & ; \text{ path-5} \end{cases}$$

where S is the neural network response for the target character j, p is the penalty for an insertion error and q for an omission error. The penalties are set to 0.2 in this embodiment.

The basic algorithm to find the optimal matching path is as follows:

Let I be the number of characters in the recognized string and J the number of characters in the target ID string

Step 1: for j = 1 to J
initialize $D_{o,j}$ to a negative large number
$D_{o,o} = 0.0$

Step 2: for i = 1 to I

for j = 1 to J + 1
compute $D_{i,j}$ according to the equation (v)
register the local path taken to an array $path_{i,j}$

Step 3: Starting from j = J + 1
while (j >=0)
trace back the $path_{i,j}$ array and register the matching character in the recognition string.

At the end of Step 3, the optimal matching pairs between the target and the recognition string are determined. The result could be directly reported to the operator. However, to make the system easier for the operator to use, it is better to aggregate all the types of errors into a single performance index. This is achieved by defining a confidence measure as discussed below.

The confidence measure must be able to reflect the actual accuracy of the entire system without penalising for insignificant mistakes. For example, insertion errors are not serious mistakes though they should be avoided as far as possible. As for character recognition, although the highest score produced by the recognizer may not correspond to the correct character, characters having the second or third highest scores may correspond. Further, the difference between this score and the highest score may be small. To take care of such situations, a penalty is introduced which depends on the extent to which the character has been mis-recognized.

Thus, having considered all these factors, the performance index or confidence measure is computed as follows:

$$CM = \frac{1}{J} \sum_{j=1}^{N} \frac{score(i)}{best\ score(i)}$$

where N is the number of matching character pairs found by the dynamic time warping procedure, score(i) is the similarity score of the $i^{th}$ character. If there is any omission error, then N will be less than J. If character i is correctly recognised, then score(i) is the best score and equals best score and the contribution of that character to the sum is 1. It can be seen that if all the characters are segmented and recognized correctly, then the sum of the N elements is J and hence the confidence measure, CM = J/J = 1 . For insertion errors which are detected by the dynamic time warping process, there will be no character in the ID string associated with them. Hence these extra characters will not enter into the computation.

Thus, the final result of the entire process is the CM score. Its value lies between 0 and 1. The operator can therefore set a specific confidence measure threshold so that the container ID code verification is deemed successful if the CM score is higher than the threshold. Otherwise, the operator is notified and can investigate the matter.

In the preferred embodiment, the processes described above have been implemented on a five transputer network which is hosted on a PC-AT microcomputer. The code was written in Parallel C Ver. 2.1.1. using the 3L Compiler. The character extraction and recognition processes were parallelised while the normalization and matching procedures were handled by the master transputer. In order to implement the character segmentation process in parallel the entire image is divided into five equal vertical strips. Each processor is allocated one image strip. Four of the vertical strips overlap in the x direction by an amount equal to the maximum allowable width of a character minus 1. This is to ensure that every character is extracted in full by a transputer. The master transputer distributes the image strips to the root and the three workers. When all the processors have finished and sent back the potential bounding boxes the master proceeds with the grouping phase of the character extraction. The recognition process takes place in parallel by distributing the character maps one by one to the worker processors. The master transputer controls and coordinates the sending of pixel maps and receiving of recognition results.

While determining the performance of the system, the character extraction and recognition processes were separately evaluated in addition to testing the accuracy of the overall system. This was done in order to test the accuracy of the individual processes, since the errors produced during character extraction are propagated to the recognition phase. The segmentation and character extraction process was tested on 191 character images under varying illumination conditions. The results of computer extraction i.e. the bounding boxes of characters, were compared to the coordinates of characters extracted manually. Table 1 shows that the number of characters correctly segmented out comprises 91.365% of the total characters present in the images.

A larger database of 441 character images was used to evaluate the recognition process. The statistical distribution of characters was found to be uneven. For example, characters 'Q' and 'V' do not occur at all while 'U' appears very frequently. On the other hand, since the sample size is sufficiently large, such statistics reflect the true probability of occurrence of each individual character during actual operation. In the recognition experiments, the database is partitioned into two sets: DS1 for training and DS2 for testing. DS1 consists of 221 images and 2231 alphanumeric characters, while DS2 has 2167 characters in the remaining 220 images. There are roughly twice as many numeral characters as alphabetic characters in both sets.

The estimated verification time for each container image is approximately 13.5 seconds. This includes the time elapsed from when the container information is received from the Gate PC till the recognition results and confidence measure are sent back to the Gate PC. Figures 1 (a) and (b) show examples of container codes extracted by the above described method. The extracted characters and their circumscribing rectangles are shown after the thresholding process.

Modifications are envisaged to improve the robustness of the character extraction process and increase its accuracy when the container image is noisy. Various approaches are being considered to recover characters with poor contrast, merged characters and partially obliterated characters.

The features disclosed in the foregoing description in the following claims and/or in the accompanying drawings may, both separately and in any combination thereof, be material for realising the invention in diverse forms thereof.

## Claims

1. A container code verification apparatus comprising: image capture means (1, 2, 3) to capture an image of a container (8) surface carrying a displayed code (16); data processing means (5) to form a pixel array from the captured image; scanning means to scan the pixel array; detection means to detect potential characters; selection and grouping means to select and group together potential characters of the displayed codes; and a neural network to determine from the pixel values of the potential characters a set of recognised characters constituting a recognised code, the pixel array being divided into a plurality of windows, the neural network comprising a plurality of input nodes defining an input layer and at least one output node defining an output layer, one or more intermediate layers being disposed between the input layer and the output layer, in which neural network the input layer is divided into a plurality of discrete areas each corresponding to a respective window; the pixel value of each pixel in a window represents the input for a corresponding input node in an area of the input layer corresponding to the respective window; each node within the network computes an output in accordance with a predetermined function; the outputs of the nodes in each area of the input layer are connected to specified nodes in a first intermediate layer which are not connected to the outputs of the nodes in another area of the input layer; the outputs of the nodes in the first and subsequent intermediate layers being connected to the inputs of the nodes in the immediately following layer; and the output nodes of the last intermediate layer are connected to the inputs of the output node or nodes of the output layer, the container code verification apparatus further comprising: comparison means to compare the target code with the recognised code; and verification means to verify or reject the recognised code in dependence upon the results of the comparison between the target code and the recognised code.

2. A container code verification apparatus according to Claim 1, wherein each node in the neural network computes the function:

$$y_i = f \left( \sum_{j=1}^{N} w_{i,j} - \theta_i \right)$$

where

$y_i =$     output activation value of node i
$x_j =$     $j^{th}$ signal input to node i
$w_{i,j} =$     connection weight from node j to node i
$\theta_i =$     bias

3. A container code verification apparatus according to Claim 1 or 2, wherein the neural network is operated using the function:

$$f(x) = \frac{T + x + |x|}{2 \, (T + |x|)}$$

4. A container code verification apparatus according to any one of Claims 1 to 3, wherein the neural network is trained using the function:

$$f(x) = \frac{1}{1 + e^{-x/T}}$$

5. A container code verification apparatus according to any preceding claim wherein the neural network is included in a transputer network (5).

6. A container code verification apparatus according to any preceding claim wherein the output layer of the neural network provides a set of scores indicating the degree of recognition between the character defined by the pixel array and the classes of character recognisable by the neural network.

7. A container code verification apparatus according to any preceding claim wherein means are provided to surround the detected potential character with a bounding box.

8. A container code verification apparatus according to Claim 7, wherein each bounding box is divided into a plurality of windows and the quantisation value of the pixels contained in each window comprises the input values for a corresponding discrete area defined in the input layer of the neural network.

9. A container code verification apparatus according to any preceding claim wherein means are provided to detect the potential characters by identifying horizontal segments (h1...n) comprising horizontally adjacent pixels with substantially equivalent quantisation levels and vertical segments (v1...n) comprising vertically adjacent pixels of substantially equivalent quantisation levels and horizontal and vertical segments (h1...n, v1...n) which are connected together defining a potential character.

10. A container code verification apparatus according to any preceding claim wherein the container surface carries potential characters which are spatially located horizontally adjacent one another and the grouping means group such horizontally adjacent characters together.

11. A container code verification apparatus according to Claim 10, wherein the selection means select only the horizontally grouped potential characters.

12. A container code verification apparatus according to any preceding claim wherein the selection means does not select any single isolated potential characters.

13. A container code verification apparatus according to any preceding claim wherein means are provided to determine the polarity of the foreground and background of each potential character and to convert the polarity to a standard polarity.

14. A container code verification apparatus according to any preceding claim wherein means are provided to scale the potential characters to a standard size.

15. A container code verification apparatus according to any preceding claim wherein means are provided to normalise the quantisation level of each pixel to a value between 0 and 1.

16. A container code verification apparatus according to any preceding claim wherein means are provided to compare the recognised code and the target code by obtaining a confidence measure representing the degree of match between the two codes and comparing the confidence measure with a predetermined threshold.

17. A container code verification apparatus according to any preceding claim further comprising means to position the container (8) carrying the displayed code (16) adjacent an image capturing means (1, 2, 3) to capture the image of the container surface.

18. A container code verification apparatus according to any preceding claim wherein artificial lighting is provided to illuminate the container to increase the image contrast.

19. A container code verification apparatus according to any preceding claim wherein the image is captured by at least one closed circuit TV camera (1, 2, 3) connected to a frame grabber (11).

20. A container code verification apparatus according to Claim 19, wherein the frame grabber has a contrast parameter which is determined by Newton's iterative method.

21. A container code verification apparatus according to any preceding claim wherein a remote mainframe computer provides the target code.

**Patentansprüche**

1. Behältercode-Prüfvorrichtung mit einer Bilderfassungsvorrichtung (1, 2, 3) zum Erfassen eines Bildes einer Oberfläche eines Behälter (8), die einen angezeigten Code (16) trägt; einer Datenverarbeitungsvorrichtung (5) zum Bilden einer Pixelanordnung aus dem erfaßten Bild; einer Abtasteinrichtung zum Abtasten der Pixelanordnung; einer Erfassungsvorrichtung zum Erfassen potentieller Zeichen; einer Auswahl- und Gruppiervorrichtung zum Auswählen und Gruppieren potentieller Zeichen der angezeigten Codes; und einem neuronalen Netz zum Ermitteln von erkannten Zeichen, die einen erkannten Code bilden, aus den Pixelwerten der potentiellen Zeichen, wobei die Pixelanordnung in mehrere Fenster aufgeteilt wird, das neuronale Netz mehrere Eingangsknoten aufweist, die eine Eingangsschicht definieren, und wenigstens einen Ausgangsknoten, der eine Ausgangsschicht definiert, wobei eine oder mehrere Zwischenschichten zwischen der Eingangsschicht und der Ausgangsschicht angeordnet sind und in dem neuronalen Netz die Eingangsschicht in mehrere diskrete Bereiche aufgeteilt ist, die jeweils einem Fenster entsprechen; wobei der Pixelwert jedes Pixels in einem Fenster den Eingang für einen entsprechenden Eingangsknoten in einem Bereich der Eingangsschicht darstellt, der dem jeweiligen Fenster entspricht; jeder Knoten in dem Netz einen Ausgangswert abhängig von einer vorgegebenen Funktion berechnet; die Ausgänge der Knoten in jedem Bereich der Eingangsschicht mit bestimmten Knoten in einer ersten Zwischenschicht verbunden sind, die nicht mit den Ausgängen der Knoten in einem anderen Bereich der Eingangsschicht verbunden sind; die Ausgänge der Knoten in der ersten und nachfolgenden Zwischenschichten mit den Eingängen der Knoten in der unmittelbar folgenden Schicht verbunden sind; und die Ausgangsknoten der letzten Zwischenschicht mit den Eingängen des oder der Ausgangsknoten der Ausgangsschicht verbunden sind, wobei die Behältercode-Prüfvorrichtung folgende weitere Merkmale aufweist: eine Vergleichsvorrichtung zum Vergleichen eines Sollcodes mit dem erkannten Code; und eine Verifikationsvorrichtung zum Verifizieren oder Verwerfen des erkannten Codes abhängig von dem Ergebnis des Vergleichs zwischen dem Sollcode und dem erkannten Code.

2. Behältercode-Prüfvorrichtung nach Anspruch 1, bei der jeder Knoten in dem neuronalen Netz folgende Funktion berechnet:

$$y_i = f \left( \sum_{j=1}^{N} w_{i,j} - \theta_i \right)$$

wobei

$y_i =$      Ausgangsaktivierungswert des Knotens i
$x_j =$      j-tes Signal, das in den Knoten i eingegeben wird
$w_{i,j} =$      Verbindungsgewicht vom Knoten j zum Knoten i
$\theta_i =$      Vorspannung

3. Behältercode-Prüfvorrichtung nach Anspruch 1 oder 2, bei der das neuronale Netz mit folgender Funktion betrieben wird:

$$f(x) = \frac{T + x + |x|}{2 (T + |x|)}$$

4. Behältercode-Prüfvorrichtung nach einem der Ansprüche 1 bis 3, bei der das neuronale Netz mit folgender Funktion

trainiert wird:

$$f(x) = \frac{1}{1 + e^{-x/T}}$$

5. Behältercode-Prüfvorrichtung nach einem der vorangehenden Ansprüche, bei der das neuronale Netz in einem Transputernetz (5) enthalten ist.

6. Behältercode-Prüfvorrichtung nach einem der vorangehenden Ansprüche, bei der die Ausgangsschicht des neuronalen Netzes eine Gruppe Trefferwerte vorsieht, die den Grad der Erkennung zwischen den Zeichen, die von der Pixelanordnung definiert werden, und den Klassen der von dem neuronalen Netz erkennbaren Zeichen angeben.

7. Behältercode-Prüfvorrichtung nach einem der vorangehenden Ansprüche, bei der Mittel zum Umgeben der erfaßten potentiellen Zeichen mit einem Grenzkasten vorgesehen sind.

8. Behältercode-Prüfvorrichtung nach Anspruch 7, bei der der Grenzkasten in mehrere Fenster aufgeteilt ist und der Quantisierungswert der in jedem Fenster enthaltenen Pixel die Eingangswerte für einen entsprechenden diskreten Bereich umfaßt, der in der Eingangsschicht des neuronalen Netzes definiert ist.

9. Behältercode-Prüfvorrichtung nach einem der vorangehenden Ansprüche, bei der Mittel zum Erfassen der potentiellen Zeichen durch Identifizieren horizontaler Segmente (h1...n) und vertikaler Segmente (v1...n) vorgesehen sind, wobei die horizontalen Segmente horizontal benachbarte Pixel mit im wesentlichen äquivalenten Quantisierungspegel umfassen und die vertikalen Segmente vertikal benachbarte Pixel mit im wesentlichen äquivalenten Quantisierungspegel umfassen, sowie durch Identifizieren horizontaler und vertikaler Segmente (h1...n, v1...n), die miteinander verbunden sind, um ein potentielles Zeichen zu definieren.

10. Behältercode-Prüfvorrichtung nach einem der vorangehenden Ansprüche, bei der die Behälteroberfläche potentielle Zeichen trägt, die räumlich horizontal nebeneinander angeordnet sind, wobei die Gruppiervorrichtung solche horizontal benachbarte Zeichen zusammenfaßt.

11. Behältercode-Prüfvorrichtung nach Anspruch 11, bei der die Auswahlvorrichtung nur die horizontal zusammengefaßten potentiellen Zeichen auswählt.

12. Behältercode-Prüfvorrichtung nach einem der vorangehenden Ansprüche, bei der die Auswahlvorrichtung keine einzelnen isolierten potentiellen Zeichen auswählt.

13. Behältercode-Prüfvorrichtung nach einem der vorangehenden Ansprüche, bei der Mittel zum Bestimmen der Polarität des Vordergrunds und des Hintergrunds jedes potentiellen Zeichens und zum Konvertieren der Polarität in eine Standardpolarität vorgesehen sind.

14. Behältercode-Prüfvorrichtung nach einem der vorangehenden Ansprüche, bei der Mittel zum Saklieren der potentiellen Zeichen auf eine Standardgröße vorgesehen sind.

15. Behältercode-Prüfvorrichtung nach einem der vorangehenden Ansprüche, bei der Mittel zum Normieren der Quantisierungspegel jedes Pixels auf einen Wert zwischen 0 und 1 vorgesehen sind.

16. Behältercode-Prüfvorrichtung nach einem der vorangehenden Ansprüche, bei der Mittel zum Vergleichen des erkannten Codes und des Sollcodes vorgesehen sind, die ein Vertrauensmaß ableiten, das den Grad der Übereinstimmung zwischen den beiden Codes wiedergibt, und das Vertrauensmaß mit einem vorgegebenen Schwellwert vergleichen.

17. Behältercode-Prüfvorrichtung nach einem der vorangehenden Ansprüche, mit Mitteln zum Positionieren des Behälters (8), der den angezeigten Code (16) trägt, neben einer Bilderfassungsvorrichtung (1, 2, 3), um das Bild der Behälteroberfläche aufzunehmen.

18. Behältercode-Prüfvorrichtung nach einem der vorangehenden Ansprüche, bei der eine künstliche Beleuchtung vorgesehen ist, um den Behälter zu beleuchten, um den Bildkontrast zu erhöhen.

19. Behältercode-Prüfvorrichtung nach einem der vorangehenden Ansprüche, bei der das Bild von wenigstens einer Ringleitungs-TV-Kamera (1, 2, 3) aufgenommen wird, die mit einem Bilddigitalisierer (11) verbunden ist.

20. Behältercode-Prüfvorrichtung nach Anspruch 19, bei der die Bilddigitalisiervorrichtung einen Kontrastparameter aufweist, der mit dem iterativen Newtonschen Verfahren ermittelt wird.

21. Behältercode-Prüfvorrichtung nach einem der vorangehenden Ansprüche, bei der ein Fern-Mainframe-Computer den Sollcode vorsieht.

**Revendications**

1. Un appareil de vérification de code de conteneur comprenant : des moyens de capture d'image (1, 2, 3) pour capturer une image d'une surface de conteneur (8) supportant un code affiché (16) ; des moyens de traitement de données (5) pour former un réseau de pixels provenant de l'image capturée ; un moyen d'analyse pour analyser le réseau de pixels ; un moyen de détection pour détecter des caractères potentiels ; un moyen de sélection et de groupement pour sélectionner et grouper ensemble des caractères potentiels des codes affichés ; et un réseau de neurones pour déterminer à partir de valeurs de pixel de caractères potentiels un ensemble de caractères reconnus constituant un code reconnu, le réseau de pixels étant divisé en une pluralité de fenêtres, le réseau de neurones comprenant une pluralité de noeuds d'entrée définissant une couche d'entrée et au moins un noeud de sortie définissant une couche de sortie, une ou plusieurs couches intermédiaires étant disposées entre la couche d'entrée et la couche de sortie, dans lequel réseau de neurones la couche d'entrée est divisée en plusieurs zones discrètes correspondant chacune à une fenêtre respective ; la valeur de chaque pixel dans une fenêtre représente le signal d'entrée pour un noeud d'entrée correspondant dans une zone de la couche d'entrée correspondant à la fenêtre respective ; chaque noeud dans le réseau calcule un signal de sortie selon une fonction prédéterminée ; les sorties des noeuds dans chaque zone de la couche d'entrée sont connectées à des noeuds spécifiques dans une première couche intermédiaire qui ne sont pas connectés aux sorties des noeuds dans une autre zone de la couche d'entrée ; les sorties des noeuds dans la première couche et les couches intermédiaires ultérieures étant reliées à des entrées des noeuds dans la couche immédiatement suivante ; et les noeuds de sortie de la dernière couche intermédiaire sont connectés aux entrées du noeud ou des noeuds de sortie de la couche de sortie, l'appareil de vérification de code de conteneur comprenant en outre : un moyen de comparaison pour comparer le code cible avec le code reconnu ; et un moyen de vérification pour vérifier ou rejeter le code reconnu selon les résultats de la comparaison entre le code cible et le code reconnu.

2. Un appareil de vérification de code de conteneur selon la Revendication 1, dans lequel chaque noeud dans le réseau de neurones calcule la fonction :

$$y_i \ = \ f \ \left( \sum_{j=1} w_{i,j} \ - \ \theta_i \right)$$

où

$y_i =$ valeur d'excitation de sortie du noeud i
$x_i =$ $j^{ème}$ entrée de signal du noeud i
$w_{i,j} =$ coefficient pondéral de connexion du noeud j vers le noeud i
$\theta_i =$ polarisation

3. Un appareil de vérification de code de conteneur selon la Revendication 1 ou 2, dans lequel le réseau de neurones fonctionne en utilisant la fonction :

$$f(x) = \frac{T + x + |x|}{2 \, (T + |x|)}$$

4. Un appareil de vérification de code de conteneur selon l'une quelconque des Revendications 1 à 3, dans lequel le réseau de neurones est en apprentissage en utilisant la fonction :

$$f(x) = \frac{1}{1 + e^{-x/T}}$$

5. Un appareil de vérification de code de conteneur selon une quelconque revendication précédente dans lequel le réseau de neurones est inclus dans un réseau transcalculateur (5).

6. Un appareil de vérification de code de conteneur selon une quelconque revendication précédente dans lequel la couche de sortie du réseau de neurones fournit un ensemble de scores indiquant le degré de reconnaissance entre le caractère défini par le réseau de pixels et les classes de caractère reconnaissables par le réseau de neurones.

7. Un appareil de vérification de code de conteneur selon une quelconque revendication précédente dans lequel des moyens sont prévus pour entourer le caractère potentiel détecté avec un bloc de limitation.

8. Un appareil de vérification de code de conteneur selon la Revendication 7, dans lequel chaque bloc de limitation est divisé en une pluralité de fenêtres et la valeur de quantification des pixels contenue dans chaque fenêtre comprend les valeurs d'entrée pour une zone discrète correspondante définie dans la couche d'entrée du réseau de neurones.

9. Un appareil de vérification de code de conteneur selon une quelconque revendication précédente dans lequel des moyens sont prévus pour détecter des caractères potentiels en identifiant des segments horizontaux (h1...n) comprenant des pixels adjacents horizontalement avec des niveaux de quantification sensiblement équivalents et des segments verticaux (v1...n) comprenant des pixels adjacents verticalement avec des niveaux de quantification sensiblement équivalents et des segments horizontaux et verticaux (h1...n, v1...n) qui sont connectés ensemble, définissant un caractère potentiel.

10. Un appareil de vérification de code de conteneur selon une quelconque revendication précédente dans lequel la surface du conteneur supporte des caractères potentiels qui sont spatialement situés horizontalement adjacents les uns aux autres et les moyens de groupement groupent de tels caractères adjacents horizontalement ensemble.

11. Un appareil de vérification de code de conteneur selon la Revendication 10, dans lequel les moyens de sélection sélectionnent seulement les caractères potentiels groupés horizontalement.

12. Un appareil de vérification de code de conteneur selon une quelconque revendication précédente dans lequel les moyens de sélection ne sélectionnent pas de quelconques caractères potentiels isolés individuels.

13. Un appareil de vérification de code de conteneur selon une quelconque revendication précédente dans lequel des moyens sont prévus pour déterminer la polarité de l'avant-plan et de l'arrière-plan de chaque caractère potentiel et pour convertir la polarité en une polarité normalisée.

14. Un appareil de vérification de code de conteneur selon une quelconque revendication précédente dans lequel des moyens sont prévus pour tracer les caractères potentiels à une taille normalisée.

15. Un appareil de vérification de code de conteneur selon une quelconque revendication précédente dans lequel des moyens sont prévus pour normaliser le niveau de quantification de chaque pixel à une valeur entre 0 et 1.

16. Un appareil de vérification de code de conteneur selon une quelconque revendication précédente dans lequel des moyens sont prévus pour comparer le code reconnu et le code cible en obtenant une mesure de confiance représentant le degré de concordance entre les deux codes et en comparant la mesure de confiance avec un seuil prédéterminé.

17. Un appareil de vérification de code de conteneur selon une quelconque revendication précédente comprenant en outre des moyens pour positionner le conteneur (8) supportant le code affiché (16) de manière adjacente au moyen de capteur (1, 2, 3) pour capter l'image de la surface de conteneur.

**18.** Un appareil de vérification de code de conteneur selon une quelconque revendication précédente dans lequel de la lumière artificielle est prévue pour illuminer le conteneur pour augmenter le contraste de l'image.

**19.** Un appareil de vérification de code de conteneur selon une quelconque revendication précédente dans lequel l'image est capturée par au moins une caméra TV à circuit fermé (1, 2, 3) connectée à un enregistreur d'images (11).

**20.** Un appareil de vérification de code de conteneur selon la Revendication 19, dans lequel l'enregistreur d'images a un paramètre de contraste qui est déterminé par la méthode itérative de Newton.

**21.** Un appareil de vérification de code de conteneur selon une quelconque revendication précédente dans lequel un ordinateur répartiteur éloigné fournit le code cible.

FIG 1a

FIG 1b

FIG 2

FIG 3

**FIG      4**

FIG            5

FIG 6

FIG 7i

FIG 7ii

EP 0 594 061 B1

|   | T | C | S | U | 8 | 2 | 0 | 5 | 4 | 3 | 6 |
|---|---|---|---|---|---|---|---|---|---|---|---|
| # | T | C | S | U | 8 | 2 |   | 5 | 4 | 3 | 6 |

I(0.6) T(0.9) C(0.8) S(0.8) O(0.7) 8(0.9) 7(0.6)    5(0.9) 4(0.7) 3(0.8) 6(0.8)

T(0.5) I(0.3) O(0.5) G(0.3) U(0.6) 2(0.3) 2(0.5)    3(0.6) 9(0.2) 7(0.6) 8(0.5)

<u>FIG        8</u>

FIG          9

FIG 10